# EUROPEAN PATENT APPLICATION

(11) **EP 2 523 429 A1**
(43) Date of publication of application: **14.11.2012**
(21) Application number: 11855262.9
(22) Date of filing: 18.05.2011
(51) Int. Cl.: H04M 1/23

(54) **KEYBOARD, MOBILE TERMINAL AND KEY ASSIGNMENT OUTPUT METHOD**

(30) Priority: 11.03.2011 CN 201110059116
(71) Applicant: ZTE Corporation, Shenzhen, Guangdong 518057 (CN)
(72) Inventor: ZHANG, Junan, Shenzhen City Guangdong Province 518057 (CN)
(74) Representative: Willquist, Sofia Ellinor
(86) International application number: PCT/CN2011/074261
(87) International publication number: WO 2012/122737

(57) **Abstract**

The present invention discloses a keyboard, mobile phone terminal and key value output method. The keyboard comprises a keyboard bottom plate and touch keys, wherein lattices with the same size are divided in equal proportion on the keyboard bottom plate; the touch keys are embedded in each of the lattices respectively; and key values in each lattice are marked in directions adjacent to other lattices, and the touch keys are electrically connected to the keyboard bottom plate. With the technical scheme of the present invention, the number of keys and keyboard area can be reduced, areas of individual keys are increased, accuracy of the keys is improved, shortcut functions reflected by the key combinations are enriched, lifespan of the keys is increased, and comfort degree of the keys and pleasantness of the operation can be enhanced.

## Description

### Technical Field

The present invention relates to the field of mobile communication, and more particularly, to a keyboard, mobile phone terminal and key value output method.

### Background of the Related Art

In the prior art, traditional touch-tone mobile phone keyboards are mostly formed by arranging mechanical keys, and have large areas, thick sizes and a large number of keys. Moreover, the lifespan of these keys is only about 0.05~0.1 million times generally, the sensitivity of the keys will be greatly decreased after long term use, and gaps between the keys will results in poor waterproof and dustproof capabilities.

In addition, in the traditional keyboards, individual keys work independently and are difficult to operate accurately in the case of smaller key areas, and the same key can have different outputs under different input methods. For example, key values which can be output by key 2 include seven different values, such as 2, A, B, C, etc. When multiple key values exist under the same input method, the key is required to be clicked several times continuously to output the correct key values, thus the operation not only is troublesome, but also has high error rate. As mobile phones are becoming increasingly popular, disadvantages of mobile phones using the traditional touch-tone keyboards or standard typewriter keyboard (e.g. a Qwerty) in appearance innovation, key function extension and improvement of key output accuracy are increasingly becoming obvious.

### Summary of the Invention

In view of this, the present invention provides a keyboard, mobile phone terminal and key value output method so as to solve problems of complicated key value input, short key lifespan, low key output accuracy and poor antifouling capability of mobile phone keyboards in the prior art.

In order to solve the technical problems described above, a technical scheme of the present invention is implemented as follows.

The present invention provides a keyboard comprising a keyboard bottom plate and touch keys, wherein lattices with the same size are divided in equal proportion on the keyboard bottom plate; the touch keys are embedded in each of the lattices respectively; and key values in each lattice are marked in directions adjacent to other lattices, and the touch keys are electrically connected to the keyboard bottom plate.

The keyboard bottom plate is formed from insulating and opaque materials.

The number of the lattices with the same size is a total of 16 of 4 rows and 4 columns, or a total of 15 of 3 rows and 5 columns; and the lattices are square or rectangle in shape.

The touch keys are salient points in shape.

The electrical connection between the touch keys and keyboard bottom plate includes capacitive electrical connection, resistive electrical connection or optical electrical connection.

The touch keys are embedded right in the middle of each of the lattices, and a distance between two adjacent touch keys is greater than or equal to 1cm.

The present invention further provides a mobile phone terminal comprises the above keyboard.

The present invention further provides a key value output method applied to the above keyboard comprises the following steps: when it is detected that a touch key in the middle of a lattice on a keyboard bottom plate is touched, marking the touch key as a first touch point; when it is detected in a preset period of time that a touch key adjacent to the first touch point is touched, acquiring a key value of the first touch point in a direction of the touch key; and in the case of detecting that no touch key is touched, acquiring and outputting the key value.

The method further comprises: when it is not detected in the preset period of time that a touch key adjacent to the first touch point is touched, deleting the recorded first touch point, and setting the key value to be empty; and when it is detected that two or more than two touch keys in the middle of the lattice on the keyboard bottom plate are touched simultaneously, forbidding recording the first touch point.

The method further comprises: detecting in the preset period of time that a touch key adjacent to the first touch point is touched, and then in the case of detecting in the preset period of time that one or more touch keys of the first touch point in a direction of the touch key are also touched, locking a key value of the first touch point in the direction of the touch key; in the case of detecting that no touch key is touched, acquiring and outputting the locked key value; and in the case of detecting that the time for touching the touch key is greater than or equal to the preset period of time, acquiring and executing a corresponding operation preset by a user.

Beneficial effects of the present invention are described as follows.

Touch keys are rearranged according to a certain rule by designing a new keyboard, and a method for detecting key values is redesigned to output different key values by determining lateral sliding in different directions through key combinations, so as to solve the problems of complicated key value input, short key lifespan, low key output accuracy and poor antifouling capability of mobile phone keyboards in the prior art, thereby reducing the number of keys and keyboard area, increasing areas of individual keys, improving accuracy of the keys, enriching shortcut functions reflected by the key combinations, increasing the lifespan of the keys, and improving comfort degree of the keys and pleasantness of the operation.

### Brief Description of Drawings

FIG. 1 is a structure diagram of a keyboard according to an embodiment of the present invention.
FIG. 2 is a schematic diagram of a 4*4 keyboard according to an embodiment of the present invention.
FIG. 3 is a flow diagram of a key value output method according to an embodiment of the present invention.
FIG. 4 is a flow diagram illustrating detailed processing of a key value output method according to an embodiment of the present invention.
FIG. 5 is a structure diagram of a mobile phone terminal according to an embodiment of the present invention.

### Preferred Embodiments of the Present Invention

In order to solve the problems of complicated key value input, short key lifespan, low key output accuracy and poor antifouling capability of mobile phone keyboards and break limitations of traditional keyboards, the present invention provides a keyboard, mobile phone terminal and key value output method so as to rearrange touch keys according to a certain rule and redesign a method for detecting key values to output different key values by determining lateral sliding in different directions through key combinations. Thus, the number of keys and keyboard area are reduced, and outputting the key values in a key combination mode is equivalent to increasing areas of individual keys, thereby improving accuracy of the keys. Besides, since there are more key combinations, the reflected shortcut functions will also be increased, therefore, comfort degree of the keys and pleasantness of the operation can be improved.

The present invention will be further described in detail in combination with the accompanying drawings and embodiments below. It should be understood that the specific embodiments described herein are intended to explain the present invention only, not to limit the present invention.

### Device embodiment 1

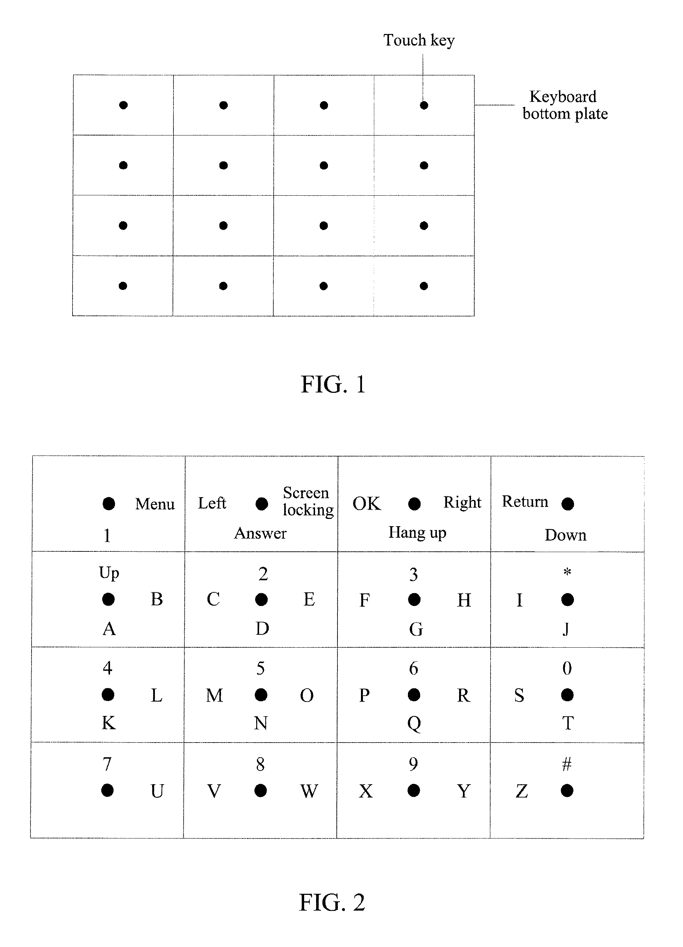

According to the embodiment of the present invention, a keyboard is provided. FIG. 1 is a structure diagram of the keyboard according to the embodiment of the present invention, in which touch keys are rearranged according to a certain rule to constitute a new keyboard. As shown in FIG. 1, the keyboard in accordance with the present invention comprises a keyboard bottom plate and touch keys, wherein lattices with the same size are divided in equal proportion on the keyboard bottom plate; the touch keys are embedded in each of the lattices respectively; and key values in each lattice are marked in directions adjacent to other lattices, and the touch keys are electrically connected to the keyboard bottom plate.

Specifically, in practical applications, the keyboard bottom plate made of insulating and opaque materials can be used and divided into a total of 16 rectangular lattices of 4 rows and 4 columns or a total of 15 rectangular lattices of 3 rows and 5 columns in equal proportion. The touch keys are embedded right in the middle of these arranged lattices respectively in the form of salient points, and a distance between two adjacent touch keys is greater than or equal to 1cm. Output key values are marked in four directions (up, down, left, right) of the lattices respectively. The touch keys are connected to a circuit of the keyboard bottom plate in a capacitive touch mode, resistive touch mode or optical touch mode. When fingers touch the salient points, the circuit can detect that the salient points are controlled without being pressed.

The new keyboard according to the embodiment of the present invention can be comprised of 4*4 or 3*5 lattices. The 4*4 keyboard is taken as an example to analyze the structure of the new keyboard. FIG. 2 is a schematic diagram of the 4*4 keyboard according to the embodiment of the present invention. As shown in FIG. 2, there are 16 lattices in total in the keyboard, one small salient point is in the center of each lattice and used to measure whether the key is touched. The whole keyboard bottom plate is integral and not cut by vertical and traversal lines between the lattices, therefore, the whole keyboard does not have pressing function. Different characters are marked in four directions (up, down, left, right) of each lattice to indicate the output key values in the directions. For example, as shown in FIG. 2, up, down, left and right key values of key 2 are 2, D, C and E respectively, and the number of marked key values of lattices close to edges of the keyboard is less than 4. The reason is that in the case of sliding from a key to an edge, the slide direction can not be detected effectively, and key values can not be output correctly, e.g. key 7 has only key values of up 7 and right U.

According to output of the keys on the keyboard, the keys can be divided into 4 function keys in the first row, including menu, up, down, left, right, OK, return, outgoing call, hang up and screen locking keys, and keys from the second row to fourth row, which mainly output 26 letters, 10 digits, * and #. It should be noted that positions of two key values, digit 1 and direction "up" are transposed in the embodiment of the present invention in order to facilitate users operation.

Each key has a long press function. In the embodiment of the present invention, only the turn-on and turn-off function of long press of the hang up key is defined, and shortcut functions of long press of other keys are completely defined by users.

Preferably, the keyboard in accordance with the present invention is a mobile phone keyboard.

It should be noted that although no keyboard full touch mobile phones have existed in the prior art, there is the essential difference between such model and the mobile phone keyboard in accordance with the present invention. In the embodiment of the present invention, mainly the keyboard is modified to change the key arrangement mode on the traditional keyboards fundamentally and the key value output mode. However, keys of a touch screen mobile phone are still arranged in the traditional key arrangement mode and only the keyboard is virtualized onto a display screen for operating.

It can be seen from the above description that the keyboard in accordance with the embodiment of the present invention can reduce the number of keys and keyboard area, increase areas of individual keys, improve accuracy of the keys, enrich shortcut functions reflected by the key combinations, increase the lifespan of the keys, and improve comfort degree of the keys and pleasantness of the operation.

### Method embodiment

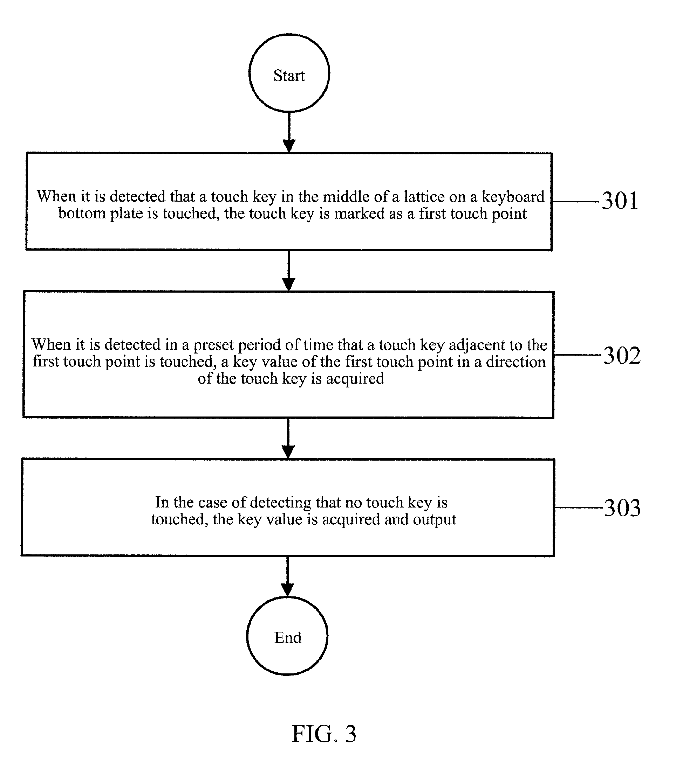

According to the embodiment of the present invention, a key value output method is provided. FIG. 3 is a flow diagram of the key value output method according to the embodiment of the present invention. As shown in FIG. 3, the key value output method according to the embodiment of the present invention comprises the following steps.

In step 301, when it is detected that a touch key in the middle of a lattice on a keyboard bottom plate is touched, the touch key is marked as a first touch point.

In step 302, when it is detected in a preset period of time that a touch key adjacent to the first touch point is touched, a key value of the first touch point in a direction of the touch key is acquired.

In step 303, in the case of detecting that no touch key is touched, the key value is acquired and output.

Preferably, when it is not detected in the preset period of time that a touch key adjacent to the first touch point is touched, the recorded first touch point is deleted, and the key value is set to be empty; and when it is detected that two or more than two touch keys in the middle of the lattice on the keyboard bottom plate are touched simultaneously, the first touch point is forbidden to be recorded. It is detected in the preset period of time that a touch key adjacent to the first touch point is touched, and then in the case of detecting in the preset period of time that one or more touch keys of the first touch point in the direction of the touch key are also touched, the key value of the first touch point in the direction of the touch key is locked; in the case of detecting that no touch key is touched, the locked key value is acquired and output; and in the case of detecting that the time for touching the touch key is greater than or equal to the preset period of time, a corresponding operation preset by a user is acquired and executed.

Specifically, in the embodiment of the present invention, when a salient point in each lattice is touched by fingers, a keyboard detection circuit captures the signal, and the salient point is marked as the first touch point (i.e., the first criterion); and when salient points in multiple lattices are touched simultaneously, the first touch point is not recorded at this time. Therefore, the first criterion implemented by this new keyboard is that only one salient point is touched at the same time.

When user operation follows the above first criterion, the first touch point is recorded successfully, but a certain output key value will not be displayed on the screen at this time, and the meaning of recording the first touch point is to take the touch point as a starting point. When the user's fingers slide to another salient point in one of four directions (up, down, left, right) of the touch point, we will display the output value of the first touch point defined in this direction on the screen.

In order to prevent the user from sliding across salient points of more than 2 keys, a first key value locking rule is used, that is, when the fingers slide across the salient point of the second key, the key value of the first touch point in this direction is locked firstly and is output when waiting leaving of the user's fingers from the keyboard. The above processing can effectively implement the function that only one key value is output in a single slide, which is also the second criterion implemented by this new type keyboard.

In order to guarantee the implementation of the first criterion, in the embodiment of the present invention, a salient point is designed right in the middle of the key, the distance between two salient points is guaranteed to be greater than the width of a fingertip (i.e. greater than or equal to 1CM, as described in the above device embodiment). When the user's fingertips slightly sweep across the salient point in the center of the key, the salient points of other keys will not be touched simultaneously.

In the embodiment of the present invention, the salient point of each key can support long press, during which a corresponding interface is displayed on the screen directly. The interface can be defined by the user, but digit keys and letter keys are output in a lateral slide mode.

It can be seen from the above processing that in the embodiment of the present invention, lateral sliding in different directions is determined through key combinations to output different key values. Thus, the number of keys and keyboard area are reduced, and outputting the key values in a key combination mode is equivalent to increasing areas of individual keys, thereby improving accuracy of the keys. Besides, since there are more key combinations, the reflected shortcut functions will also be increased. Since touch keys are used, the fingers only sweep across one direction slightly to output the key values without pressing the keyboard. Therefore, lifespan of the keys, comfort degree and pleasantness of finger operation can be improved.

Preferably, the above key value output method can be used in mobile phones. The above technical scheme of the embodiment of the present invention will be described in detail in combination with the accompanying drawings below.

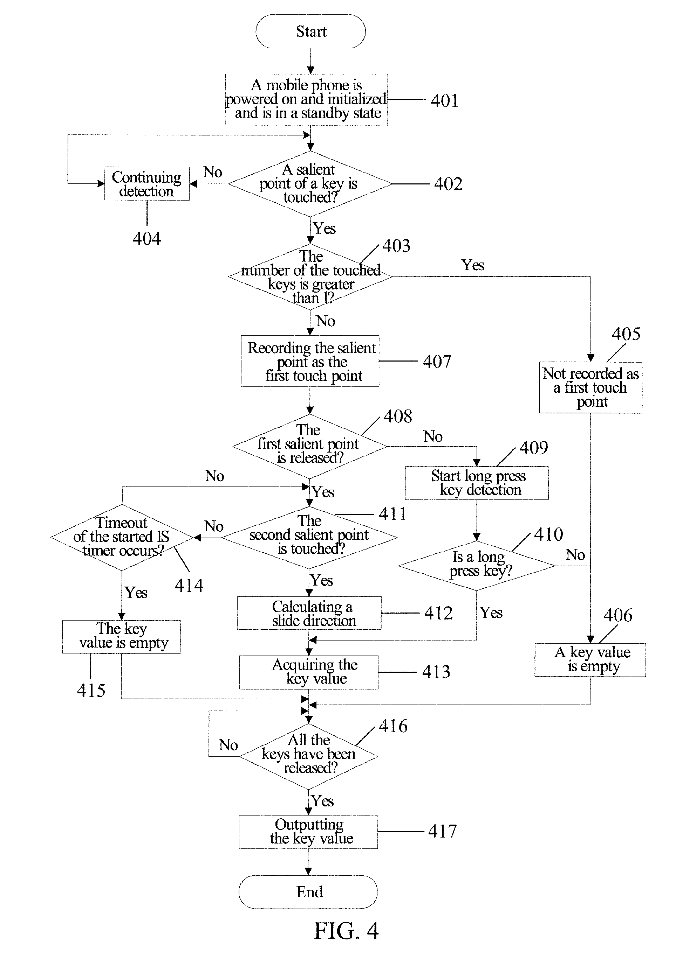

FIG. 4 is a flow diagram illustrating detailed processing of a key value output method according to an embodiment of the present invention. As shown in FIG. 4, the method comprises the following steps.

In step 401, a mobile phone is powered on and initialized to enter a standby state normally.

In step 402, when a screen locking function of the mobile phone is enabled, a touch detection program for salient points of keys is started. It is determined whether that a salient points of a key is touched is detected, and if it is detected that the salient point of the key is touched, step 403 is executed, otherwise step 404 is executed.

In step 403, it is determined whether the number of the touched salient points on a keyboard is greater than 1, if yes, step 405 is executed, otherwise step 407 is executed.

In step 404, the detection is continued, and step 402 is executed.

In step 405, if the number of the touched salient points on the keyboard is greater than 1, it is believed that this is an invalid touch, the touch points are not recorded at the moment, and step 406 is executed.

In step 406, key values are set as empty, and step 416 is executed.

In step 407, when the number of the touched salient points on the keyboard is equal to 1, it is believed that this is a valid touch, the salient point is stored as the first touch point, the function of which is to define a start key in a slide direction, and after the slide direction is detected, the key value of the first touch point in this direction is output.

In step 408, it is determined whether the first touch point is released, and if yes, step 409 is executed, otherwise step 411 is executed.

In step 409, after the first touch point is determined, and when a user's finger does not slide away and still put on the first touch point, long press key detection is started at this time.

In step 410, it is determined whether the key is long pressed, when the user does not move away in 2-3 seconds, indicating that the key is long pressed, and if the determination is yes, step 413 is executed, otherwise step 406 is executed.

In step 411, after the first touch point is determined, when the user's finger slides, the salient point is released naturally, then it is determined whether the second salient point is touched, and if yes, step 412 is executed, otherwise step 414 is executed.

In step 412, when other salient points are touched by the user in 1 second, the slide direction is calculated according to the position of the salient point corresponding to the first touch point, and step 413 is executed.

In step 413, the key value of the first touch point in this direction is acquired, if the key is long pressed, a long press key function defined by the first touch point is acquired for displaying, and step 416 is executed.

In step 414, a I S timer is started at this time, and it is determined whether timeout of the timer occurs, that is, whether the user touches the second salient point in 1 second, and if yes, step 415 is executed, otherwise step 411 is executed.

In step 415, when the user does not touch salient points of other keys in 1 second, it is believed that this is an invalid operation, the saved first touch point is deleted, the key value is set as empty, and step 416 is executed.

In step 416, the key detection circuit has acquired the key value through the above steps, and it is determined whether all the keys have been released completely, and if yes, step 417 is executed, and otherwise step 416 is repeated.

In step 417, when the user's finger moves away from all the touched keys, a corresponding key value or shortcut menu will be displayed on the screen, and a complete slide output operation of the key is finished at the moment.

It can be seen from the above processing that the embodiment of the present invention provides a brand new key operation method for users, comfort degree of the key operation of the user is improved greatly, and functions of the keys are extended by fully using the directions. In addition, using the method for outputting key values of mobile phones in accordance with the present invention, the functions of each key are enhanced greatly, and outputting one key value in one slide operation also improves the operation efficiency greatly. Moreover, compared with traditional keys, in the case of similar operation time, the output mode using the key combinations (sliding across 2 salient points to locate accurate slide direction) increases the operation area by one times and is more suitable for the user operation.

### Device embodiment 2

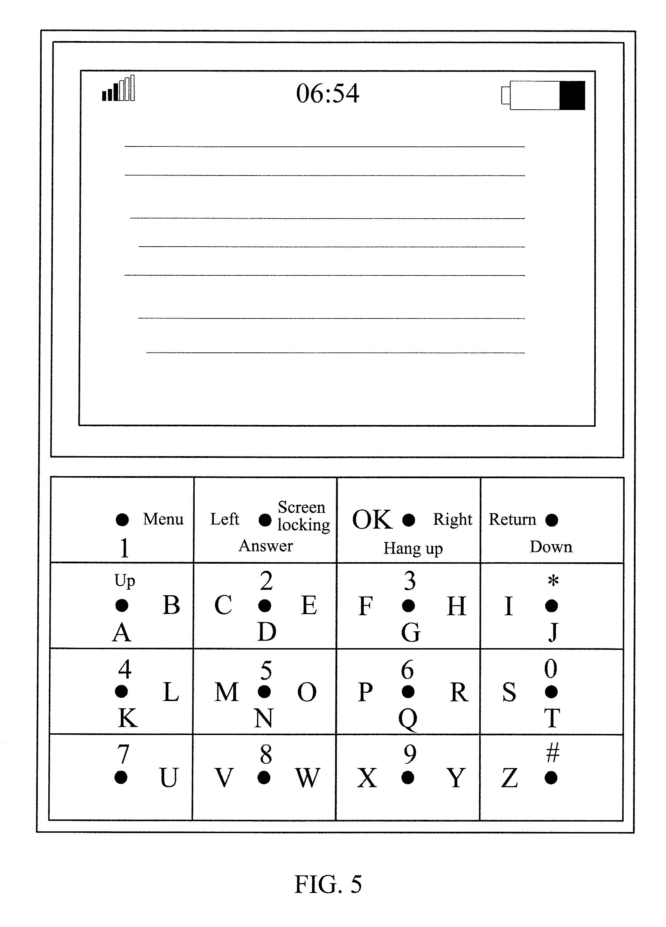

According to the embodiment of the present invention, a mobile phone terminal is provided. FIG. 5 is a structure diagram of the mobile phone terminal according to the embodiment of the present invention. As shown in FIG. 5, the mobile phone terminal according to the embodiment of the present invention uses the mobile phone keyboard described in the device embodiment 1.

In the device embodiment 1, the structure of the mobile phone keyboard has been described in detail and will not be repeated here.

The front view of the mobile phone terminal according to the embodiment of the present invention is mainly divided into 2 parts: a liquid crystal display and a keyboard. The keyboard uses the new type touch integral keyboard described in the device embodiment 1, and the number of keys is 5 less than 21 keys of the traditional touch-tone keyboard. The keyboard bottom plate is one integral insulation board, and only regular perforated holes on the bottom board expose salient points of touch keys, so the production technology is simple, and installation is easy. Since lateral sliding is used to output key values, press space is omitted such that the thickness of the keyboard reduces and the mobile phone terminal can be made lighter and thinner.

In conclusion, the method and device in accordance with the embodiment of the present invention has stronger applicability, various mobile phones and other electronic devices using keyboards can be improved. The new type touch keyboard can be used in hardware using the corresponding key detection method, and is easy to implement; it has great advantages over the traditional touch-tone keyboards, for example, it fully considers the user experience, improves comfort degree of key operation of the user greatly, fully uses the directions to extend functions of the keys, decreases the number of keys and thickness of the keyboard, and can help to design thinner and smaller mobile phones.

Although the preferred embodiments of the present invention have been disclosed for the purpose of exemplification, it will be appreciated by those skilled in the art that various improvements, additions and substitutions are also possible. Therefore, the scope of the present invention should not be limited to the embodiments described above.

## Claims

1. A keyboard comprising a keyboard bottom plate and touch keys, wherein lattices with the same size are divided in equal proportion on the keyboard bottom plate; the touch keys are embedded in each of the lattices respectively; and key values in each lattice are marked in directions adjacent to other lattices, and the touch keys are electrically connected to the keyboard bottom plate.

2. The keyboard according to claim 1, wherein the keyboard bottom plate is formed from insulating and opaque materials.

3. The keyboard according to claim 1, wherein the number of the lattices with the same size is a total of 16 of 4 rows and 4 columns, or a total of 15 of 3 rows and 5 columns; and the lattices are square or rectangle in shape.

4. The keyboard according to claim 1, wherein the touch keys are salient points in shape.

5. The keyboard according to claim 1, wherein the electrical connection between the touch keys and keyboard bottom plate includes capacitive electrical connection, resistive electrical connection or optical electrical connection.

6. The keyboard according to any one of claims 1 to 5, wherein the touch keys are embedded right in the middle of each of the lattices, and a distance between two adjacent touch keys is greater than or equal to 1cm.

7. A key value output method applied to the keyboard according to any one of claims 1 to 5 comprises the following steps:
when it is detected that a touch key in the middle of a lattice on a keyboard bottom plate is touched, marking the touch key as a first touch point;
when it is detected in a preset period of time that a touch key adjacent to the first touch point is touched, acquiring a key value of the first touch point in a direction of the touch key; and
in the case of detecting that no touch key is touched, acquiring and outputting the key value.

8. The method according to claim 7, further comprising:
when it is not detected in the preset period of time that a touch key adjacent to the first touch point is touched, deleting the recorded first touch point, and setting the key value to be empty; and
when it is detected that two or more than two touch keys in the middle of the lattice on the keyboard bottom plate are touched simultaneously, forbidding recording the first touch point.

9. The method according to claim 7, further comprising:
detecting in the preset period of time that a touch key adjacent to the first touch point is touched, and then in the case of detecting in the preset period of time that one or more touch keys of the first touch point in a direction of the touch key are also touched, locking a key value of the first touch point in the direction of the touch key;
in the case of detecting that no touch key is touched, acquiring and outputting the locked key value; and
in the case of detecting that the time for touching the touch key is greater than or equal to the preset period of time, acquiring and executing a corresponding operation preset by a user.

10. A mobile phone terminal, comprising the keyboard according to claims 1 to 6.
